# FASCICULE DE BREVET EUROPEEN

(11) **EP 2 386 785 B1**
(45) Date de publication et mention de la délivrance du brevet: **09.01.2013**
(21) Numéro de dépôt: 11165557.7
(22) Date de dépôt: 10.05.2011
(51) Int. Cl.: F16K 24/04

(54) **Vis notamment de purge pour un système de frein d'un véhicule automobile**
Schraube zum Entlüften des Bremssystems eines Kraftfahrzeuges
Screw especially for venting a braking system of a vehicle

(30) Priorité: 12.05.2010 FR 1053747
(43) Date de publication de la demande: 16.11.2011
(73) Titulaire: LISI Automotive Rapid, 95650 Puiseux-Pontoise (FR)
(72) Inventeur: Dechambenoit, Alain, 70310 Faucogney-et-la-Mer (FR)
(74) Mandataire: Thinat, Michel

(56) Documents cités:
- EP-A1- 0 094 459
- GB-A- 2 044 402
- US-A1- 2004 113 425
- US-A1- 2005 121 642

## Description

Vis, notamment vis de purge, comprenant un espace interne fermé à une extrémité et ouvert à l'autre extrémité de la vis, et un canal traversant la paroi de la vis et débouchant dans l'espace interne de celle-ci.

Les vis de purge de ce type, qui sont connues, présentent l'inconvénient majeur qu'elles sont réalisées selon un procédé d'usinage impliquant un enlèvement et donc une perte de matières et le risque de présence de particules libres de cette matière, comme en témoigne le document GB 2 044 402. La vis décrite dans ce document comporte un espace citerne, qui est réalisé sous forme d'un passage axial et le canal précité est un petit trou, aussi bien le passage que le trou étant obtenu par usinage et donc enlèvement de matière.

L'invention a pour but de pallier cet inconvénient.

Pour atteindre ce but, la vis de purge selon l'invention comporte les caractéristiques qui sont énoncées dans la partie caractérisante de la revendication 1.

D'autres caractéristiques sont indiquées dans les revendications dépendantes.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'un étrier de frein pourvu d'une vis de purge ;
- la figure 2 est une vue en perspective d'une vis de purge selon l'invention ;
- la figure 3 est une vue en coupe longitudinale de la vis de la figure 2 ;
- la figure 4 est une vue en perspective, à plus grande échelle, de la partie de tête conique de la vis de purge de la figure 3, et
- la figure 5 est une vue schématique d'un dispositif de réalisation du perçage de la vis selon l'invention.

L'invention sera décrite ci-après, à titre d'exemple, dans son application à un système de freinage d'un véhicule automobile, plus précisément un étrier de frein ou un cylindre de roue.

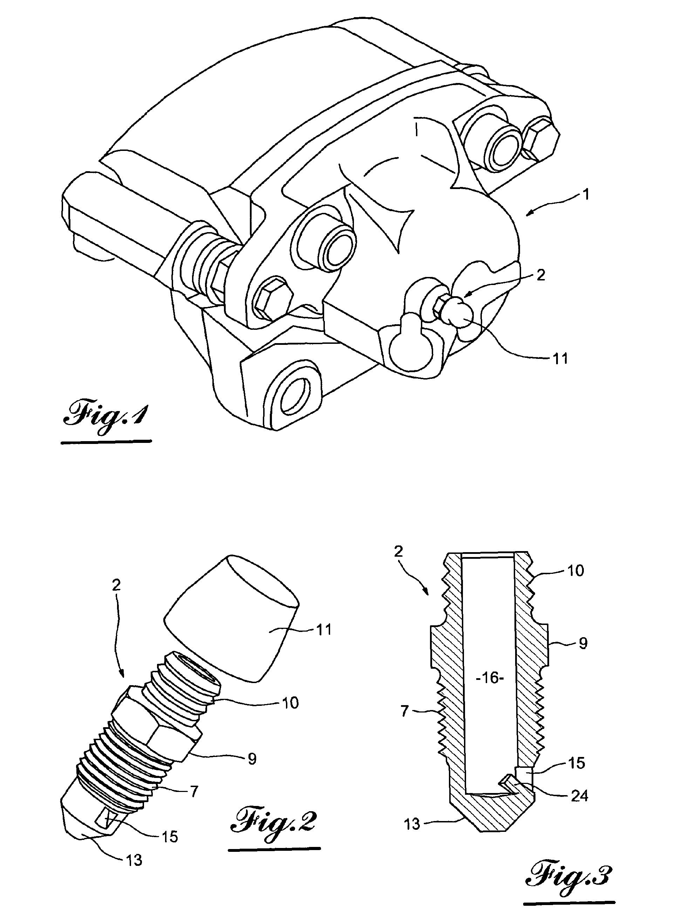

La figure 1 représente ainsi un étrier de frein 1 pourvu d'une vis de purge 2. Cette vis est mise en place dans un orifice approprié 3 pratiqué dans l'étrier et sert à purger l'air contenu dans celui-ci lors de la mise en place du liquide de frein dans le circuit de freinage en la dévissant. Elle doit aussi assurer l'étanchéité de l'étrier de frein au niveau de cet orifice.

Comme il ressort des figures 2 à 4, une vis de purge comporte essentiellement un corps cylindrique creux 2. Ce corps est pourvu d'un filetage 7 sur sa face cylindrique extérieure permettant le vissage de la vis dans l'orifice 3, un bord extérieur hexagonal d'entraînement 9 et, au niveau de son extrémité extérieure libre, une partie ondulée 10 permettant le raccordement d'un capuchon 11 ou d'un tuyau (non représenté).

La partie d'extrémité interne de la vis est configurée de façon à former une tête d'étanchéité 13 de forme tronconique.

La vis comporte, dans l'exemple représenté, juste au-dessus de la partie tronconique d'étanchéité 13 et de la partie filetée 7 un perçage radial 15 qui débouche dans l'espace interne 16 de la vis.

C'est à travers ce perçage 15 que l'intérieur du réservoir peut communiquer avec l'espace interne 16 de la vis, lorsque celle-ci est dans sa position dévissée.

Conformément à l'invention, le perçage 15 est réalisé par forgeage, et non pas, comme les vis de l'état de la technique, par usinage. La réalisation par forgeage présente l'avantage qu'il n'y a pas de détachement de matières sous forme d'une pastille ou d'un copeau, de façon qu'il n'y a pas à gérer l'évacuation de matières détachées.

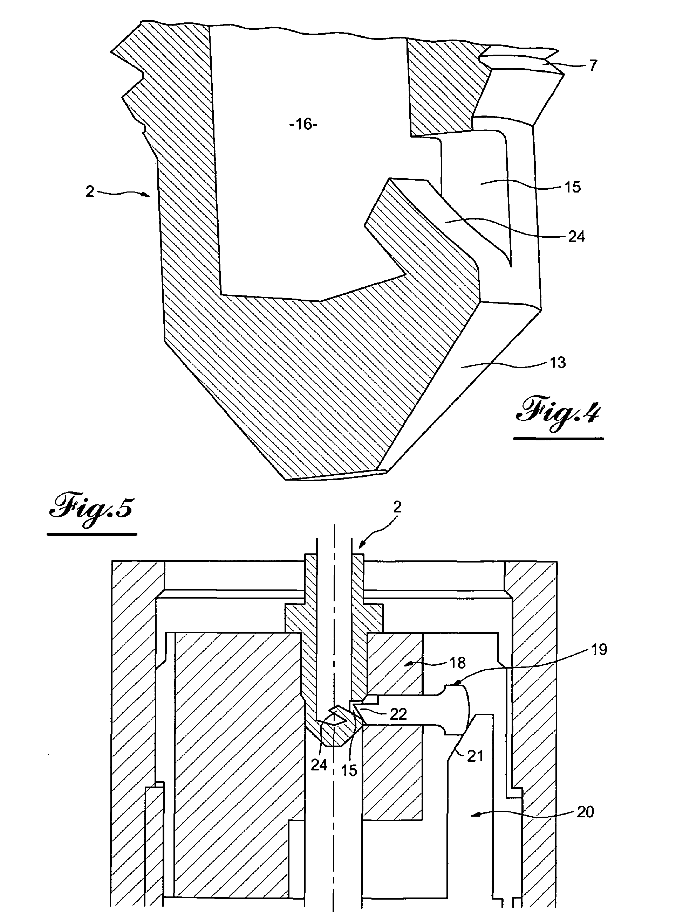

La figure 5 illustre, à titre d'exemple, un dispositif de réalisation par forgeage du perçage 15 selon l'invention.

On constate que la vis, avant la réalisation du filetage est disposée dans un corps de support 18 traversé radialement par un poinçon 19 qui est axialement déplaçable par un actionneur 20 pourvu d'une rampe inclinée 21, entre une position de repos dans laquelle son extrémité avant en forme de pointe 22 est dégagée, latéralement de la vis et la position de perçage représentée à la figure 5. Grâce à la rampe 21, le mouvement de l'actionneur qui est orienté perpendiculairement à l'axe de poinçon, provoque le mouvement axial de perçage du poinçon. Ainsi, le poinçon dans sa course de réalisation du perçage 5 repousse la portion de paroi à percer, de la vis vers l'intérieur. Après le perçage, la portion repoussée présente la forme d'une petite languette 24 qui s'étend dans l'espace interne 16 de la vis. Cette languette reste attachée à la vis.

Bien entendu le perçage peut être réalisé de différentes manières, sans usinage, par une opération de forgeage ou frappe sans détachement de matière. La vis selon l'invention est utilisable pour de multiple application, notamment le passage de liquide ou de gaz.

## Revendications

1. Vis, notamment vis de purge, comprenant un espace interne fermé à une extrémité et ouvert à l'autre extrémité de la vis, et un canal traversant la paroi de la vis et débouchant dans l'espace interne de celle-ci, **caractérisée en ce que** le canal (15) est formé par un perçage de la paroi de la vis, qui est réalisé par une opération de forgeage sans détachement de matière.

2. Vis selon la revendication 1, **caractérisée en ce que** la matière de la paroi repoussée lors du perçage est en forme d'une languette (22) s'étendant dans l'espace interne (16) de la vis.

3. Vis selon la revendication 2, **caractérisée en ce que** le perçage (15) est situé au niveau de la paroi de fermeture de la vis.

4. Vis selon l'une des revendications 1 à 3, **caractérisée en ce qu'**elle comprend une portion périphérique extérieure filetée (7) et une partie extérieure d'entraînement en rotation (9), le perçage (15) étant situé entre l'extrémité fermée (13) de la vis et la partie filetée.

5. Vis selon l'une des revendications 1 à 4, **caractérisée en ce que** la vis est déplaçable entre une position d'obturation d'un orifice qui la reçoit et une position dans laquelle l'orifice est en communication avec l'espace interne (16) de la vis, à travers le perçage précité (15).

6. Vis selon la revendication 5, **caractérisée en ce que** l'extrémité fermée de la vis présente une forme conique d'obturation (13) de l'orifice.

## Claims

1. A screw, in particular a bleeding screw, comprising an inner space closed at one end and open at the other end of the screw, and a channel passing through the wall of the screw and emerging in the inner space thereof, **characterized in that** the channel (15) is formed by a piercing in the wall of the screw, which is done by a drilling operation without detaching material.

2. The screw according to claim 1, **characterized in that** the material of the wall pushed back during the piercing is in the form of a tongue (22) extending into the inner space (16) of the screw.

3. The screw according to claim 2, **characterized in that** the piercing (15) is situated at the closing wall of the screw.

4. The screw according to one of claims 1 to 3, **characterized in that** it comprises a threaded outer peripheral portion (7) and a rotating outer portion (9), the piercing (15) being situated between the closed end (13) of the screw and the threaded portion.

5. The screw according to one of claims 1 to 4, **characterized in that** the screw can be moved between a position covering an opening that receives it and a position in which the opening communicates with the inner space (16) of the screw, through the aforementioned piercing (15).

6. The screw according to claim 5, **characterized in that** the closed end of the screw has a conical covering form (13) for covering the opening.

## Patentansprüche

1. Schraube, vor allem zum Entlüften, die einen Innenraum, der auf der einen Seite der Schraube geschlossen und auf der anderen Seite geöffnet ist, und einen Durchgangskanal der Wand der Schraube, der in den Innraum derselben mündet, umfasst, **dadurch gekennzeichnet, dass** der Kanal (15) durch einen Durchbruch durch die Wand der Schraube gebildet wird, der anhand eines Bohrvorgangs ohne Entfernen von Material hergestellt ist.

2. Schraube nach Anspruch 1, **dadurch gekennzeichnet, dass** das beim Bohren verdrängte Material der Wand die Form einer Zunge (22) hat, die sich in den Innenraum (16) der Schraube erstreckt.

3. Schraube nach Anspruch 2, **dadurch gekennzeichnet, dass** sich die Bohrung (15) auf Ebene der Verschlusswand der Schraube befindet.

4. Schraube nach einem der Ansprüche 1 bis 3, **dadurch gekennzeichnet, dass** sie einen äußeren peripheren Gewindeabschnitt (7) und einen äußeren Rotationsantriebsteil (9) umfasst, wobei sich die Bohrung (15) zwischen dem geschlossenen Ende (13) der Schraube und dem Gewindeabschnitt befindet.

5. Schraube nach einem der Ansprüche 1 bis 4, **dadurch gekennzeichnet, dass** die Schraube zwischen einer Verschlussstellung einer Öffnung, die sie aufnimmt, und einer Stellung, in der die Öffnung mit dem Innenraum (16) der Schraube in Kommunikation ist, durch die vorgenannte Bohrung (15) verlagerbar ist

6. Schraube nach Anspruch 5, **dadurch gekennzeichnet, dass** das geschlossene Ende der Schraube eine konische Verschlussform (13) der Öffnung aufweist.
